# EUROPEAN PATENT APPLICATION

(11) **EP 3 098 471 A1**
(43) Date of publication of application: **30.11.2016**
(21) Application number: 16001136.7
(22) Date of filing: 19.05.2016
(51) Int. Cl.: F16D 48/02

(54) **VEHICLE DRIVELINE CLUTCH CONTROL SYSTEMS**

(30) Priority: 28.05.2015 GB 201509217
(71) Applicant: Raicam Clutch Limited, West Midlands B3 2AS (GB); AP Automotive Products Srl, 60030 Moie di Maiolati (IT)
(72) Inventor: Struve, Benjamin Chetwood, Kenilworth, Warwickshire CV8 2GN (GB); Russo, Amedeo, 60035 Ancona (IT)
(74) Representative: Morrall, Roger

(57) **Abstract**

A control system for a vehicle driveline clutch which drives ground engaging wheels from a power unit. The system has a driver operated clutch control which allows the vehicle driver to manually operate the clutch when moving away from rest and stopping and when gearshifting in a transmission of the driveline and an electrically powered actuator which can operate the clutch independently from the driver operated control. The driver operated control operates a hydraulic master cylinder which is connected with an actuating cylinder for the pressurisation thereof to provide a thrust force to manually actuate the clutch and the electrical operation of the clutch is provided by an electric motor which actuates a piston in the actuating cylinder to pressurise this cylinder and thus again actuate the clutch under the control of the motor. The control system also includes a pedal force accumulator which is also hydraulically connected with the master cylinder via by-pass valve means. Operation of the electric motor opens the by-pass valve means to allow any hydraulic pressure generated by the master cylinder to be absorbed by the accumulator so that the master cylinder can be operated normally when the clutch has already been actuated by the motor. The control system can also be arranged to select a coasting mode of operation of the vehicle in which the drive clutch is disengaged and the engine output is reduced when a number of predetermined vehicle operating conditions occur.

## Description

This invention relates to vehicle driveline clutch control systems and in particular to such systems for the control of vehicles which have an engine which drives ground engaging wheels via a driveline which includes a disengageable drive clutch which may be driver operated or may be electronically controlled in response to certain predetermined vehicle operating circumstances.

Problems of actuator force conflict may arise in such control systems in which the clutch is driver operated hydraulically and electronically controlled via an electric actuator.

It is an object of the present invention to provide such a control system which mitigates the above problems.

Thus according to the present invention there is provided a control system for a vehicle driveline clutch which drives ground engaging wheels from an engine, the system having a driver operated clutch control which allows the vehicle driver to manually operate the clutch when moving away from rest and stopping and when gearshifting in a transmission of the driveline and an electrically powered actuator which can operate the clutch independently from the driver operated control, the system being characterised in that the driver operated control operates a hydraulic master cylinder which is connected with an actuating cylinder for the pressurisation thereof to provide a thrust force to manually actuate the clutch and the electrical operation of the clutch is provided by an electric motor which actuates a piston in the actuating cylinder to pressurise this cylinder and thus again actuate the clutch under the control of the motor, the control system also including a pedal force accumulator which is also hydraulically connected with the master cylinder via by-pass valve means, operation of the electric motor opening the by-pass valve means to allow any hydraulic pressure generated by the master cylinder to be absorbed by the accumulator so that the master cylinder can be operated normally when the clutch has already been actuated by the motor.

The provision of the pedal force accumulator and by pass valve arrangement mitigates any conflicts between the forces generated by the hydraulic and electrical operation of the clutch.

Conveniently part of the piston also provides the by-pass valve means so that movement of the piston to a clutch disengaged position by the electric motor also connects the hydraulic pressure generated by the operation of the master cylinder to the pedal force accumulator.

The pedal force accumulator may includes piston means displaceable against two levels of spring loading by the hydraulic pressure generated by the master cylinder so that the operator of the master cylinder experiences two levels of resistance to the operation of the master cylinder.

The electric motor may have a threaded output shaft on which the piston is screw-threaded and the piston may be held against rotation in the actuating cylinder so that rotation of the output shaft by the motor moves the piston axially in the actuating cylinder to provide the thrust force to operate the associated clutch.

The control system may be arranged to select a coasting mode of operation of the vehicle in which the drive clutch is disengaged and the engine output is reduced when a number of predetermined vehicle operating conditions occur.

The provision of the coasting mode significantly improves vehicle economy.

Typically the coasting mode will be selected when the following conditions are met:
- An accelerator pedal has an input < a predetermined threshold value, AND
- Specified gears are selected in the transmission of the driveline, AND
- A transmission input shaft speed > engine idle speed (indicating that the vehicle is operating in an overrun condition), AND
- Power unit speed < a predetermined threshold speed (to avoid component overspeeding).

Additionally the occurrence of some further operating conditions could also be used to trigger the selection of the coasting mode, for example:
- Power unit operating temperature > threshold temperature (to allow the engine to warm up in cold weather)
- No significant 'recent' input the vehicle steering (to prevent coasting being initiated when driving in winding roads).

The control system can also cancel the operation of the coasting mode and reengage the clutch when the following vehicle operating conditions occur:
- Driver applies input to accelerator pedal, and increases the power unit speed to equal that of the transmission input shaft, OR
- Driver applies the brakes of the vehicle, OR
- Driver changes gear, or presses and releases a clutch operating pedal.

Additionally, some other information which is typically available from the various operating systems in modem vehicles may be used to anticipate driver requirements, and could be also be used to terminate coasting mode. For example:
- Driver uses turn indicators (signalling his intention to make a turn - he may want to slow the vehicle so engine braking should be restored).
- Rain sensors or windscreen wipers are active, or the ambient temperature sensor indicates the possibility of ice (it is not desirable for the drive conditions of the car to change unexpectedly during slippery road conditions).
- GPS information indicates that the environment is not appropriate for coasting (for example: approaching a bend in the road, or the steep downhill section where power unit engine braking will be required).

The control system may form part of an overall electronic clutch control system such as that described and claimed in the Applicant's prior patent application No. WO2014/135831 or may be a self contained control system fitted as an "add -on" to an existing manually operated vehicle clutch control system.

The actuator is also arranged within the overall clutch operating system architecture so that the driver is able to operate the clutch independently using a clutch operating pedal to control the vehicle when moving away from rest (launching) and when gearshifting in a transmission of the driveline, whereas the actuator is able to operate the clutch independently to open the clutch when, for example, coasting mode is required.

A closed loop algorithm may be used to control engagement of the clutch when accelerating the vehicle after coasting so that the clutch is only engaged when the speed of the power unit is higher than the speed of rotation of an input shaft of the transmission of the driveline thereby ensuring that only a accelerating torque is applied to the driveline.

The invention also provides an actuator unit for hydraulic and electrical operation of a vehicle clutch in a control system as described above, the unit being characterised by comprising:
- an actuating cylinder having an output which provides a thrust force to operate an associated clutch operating slave cylinder,
- an inlet for connection to a manually operable master cylinder for pressurisation thereof to provide the thrust force to operate the associated slave cylinder,
- an actuator mechanism for connecting the electric motor with a piston in the actuating cylinder to pressurise the cylinder to provide the thrust force to operate the associated slave cylinder,
- a pedal force accumulator hydraulically connected with the inlet via the by-pass valve means , the actuator mechanism opening the by-pass valve means to allow any hydraulic pressure generated by the master cylinder to be absorbed by the accumulator so that the master cylinder can be operated normally when the motor has already been actuated.

In accordance with a further aspect of the present invention there is also provided an actuator unit for hydraulic and electrical operation of a vehicle clutch, the unit being characterised by comprising:
- an actuating cylinder having an output which provides a thrust force to operate an associated clutch operating slave cylinder,
- an inlet for connection to a manually operable master cylinder for pressurisation thereof to provide the thrust force to operate the associated slave cylinder,
- an actuator mechanism for connecting an associated electric motor with a piston in the actuating cylinder to pressurise the cylinder to provide the thrust force to operate the associated slave cylinder,
- a pedal force accumulator hydraulically connected with the inlet via the by-pass valve means , the actuator mechanism opening the by-pass valve means to allow any hydraulic pressure generated by the master cylinder to be absorbed by the accumulator so that the master cylinder can be operated normally when the motor has already been actuated.

One embodiment of the present invention will now be described with reference to and as shown in the accompanying drawings in which:-
Figure 1 shows an overall schematic view of a driveline control system in accordance with the present invention applied to a clutch by wire arrangement which has an electronic clutch control unit which controls the overall operation of the clutch and also the implementation of the coasting mode of the present invention;
Figure 2 to 5 show overall schematic views of various stages in the operation of a hydraulically operated clutch actuation system in accordance with the present invention;
Figure 6 shows a graphical representation of the behaviour of the coasting system when the accelerator pedal is pressed during coasting to invoke the re-engagement of the clutch;
Figures 7 to 10 shows details of one form of actuator suitable for operation of the clutch;
Figure 11 shows a graph of clutch clamping force and the biasing force applied to a clutch operating rocker lever of the actuator and the resultant force which the actuator motor must apply throughout its travel;
Figure 12 shows the linear travel characteristic provided by the actustor rocker lever throughout its travel;
Figures 13 to 15 show part sections through an actuator unit which embodies the operating principle set out schematically in Figures 2 to 5.

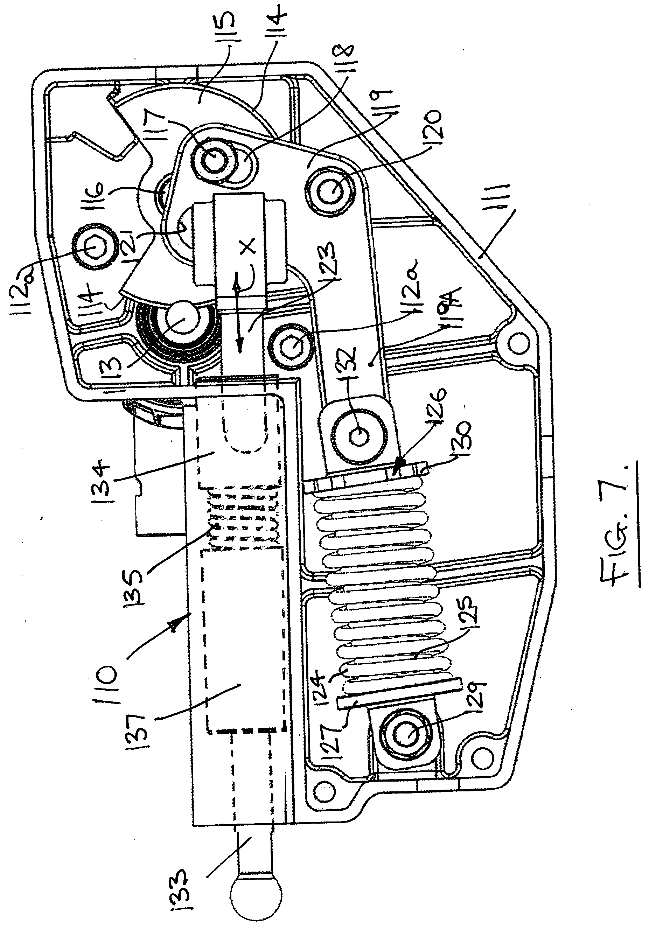

Referring to the drawings, a vehicle has an engine 10 which drives a driveline including a gearbox 11 and a drive clutch 12 which drive ground engaging wheels (not shown). The clutch is operated by a release bearing 13 which is moved towards the clutch to disengage the clutch by an actuator 14 which includes a hydraulic piston 15 which pressurises fluid in chamber 16 to operate a slave cylinder 17 adjacent and concentric with the release bearing 13 to move release bearing 13 and disengage the clutch. Piston 15 is moved by a motor 18 which forms part of actuator 14 and which is connected with piston 15 via a mechanism 19. An example of a suitable form of actuator is disclosed and claimed in the previously referred to earlier UK patent application No. 1420522.3 which is described below in relation to Figure 7 to 12.

The operation of motor 18 is controlled by a motor controller 20 which receives signals from an electronic clutch control unit 21. Control unit 21 in turn receives inputs from a driver operated clutch control pedal 22 provided with a pedal position sensor 23, a vehicle CAN bus 24, an engine controller 25 and a transmission shaft speed sensor 27 via line 26. A spring 28 operates on pedal 22 to simulate normal pedal feel as the pedal is pressed

The clutch control unit 21 controls the state of engagement of the clutch 12 in accordance with the position selected by the driver via pedal 22 and other vehicle operating criteria which do not form part of the present invention. Suitable control units are described and claimed in, for example, the Applicant's earlier patent application WO2014/135831.

The clutch control unit can also be arrange to select a coasting mode of operation of the vehicle in which the drive clutch is disengaged and the engine output is reduced by selecting the engine idle speed when a number of vehicle operating parameters occur.

Typically the coasting mode will be selected when the following conditions are met:
- An accelerator pedal has an input < a predetermined threshold value, AND
- Specified gears are selected in a transmission of the driveline, AND
- A transmission input shaft speed > engine idle speed (indicating that the vehicle is operating in an overrun condition), AND
- Power unit speed < a predetermined threshold speed (to avoid component overspeeding).

Additionally the occurence of some further operating conditions could also be used to trigger the selection of the coasting mode, for example:
- Power unit operating temperature > threshold temperature (to allow the engine to warm up in cold weather)
- No significant 'recent' input the vehicle steering (to prevent coasting being initiated when driving in winding roads).

The control system can also cancel the operation of the coasting mode and reengage the clutch when the following vehicle operating conditions occur:
- Driver applies input to accelerator pedal, and increases the power unit speed to equal that of the transmission input shaft, OR
- Driver applies the brakes of the vehicle, OR
- Driver changes gear, or presses and releases a clutch operating pedal.

Additionally, some other information which is typically available from the various operating systems in modern vehicles may be used to anticipate driver requirements, and could be also be used to terminate coasting mode. For example:
- Driver uses turn indicators (signalling his intention to make a turn - he may want to slow the vehicle so engine braking should be restored).
- Rain sensors or windscreen wipers are active, or the ambient temperature sensor indicates the possibility of ice (it is not desirable for the drive conditions of the car to change unexpectedly during slippery road conditions).
- GPS information indicates that the environment is not appropriate for coasting (for example: approaching a bend in the road, or the steep downhill section where power unit engine braking will be required).

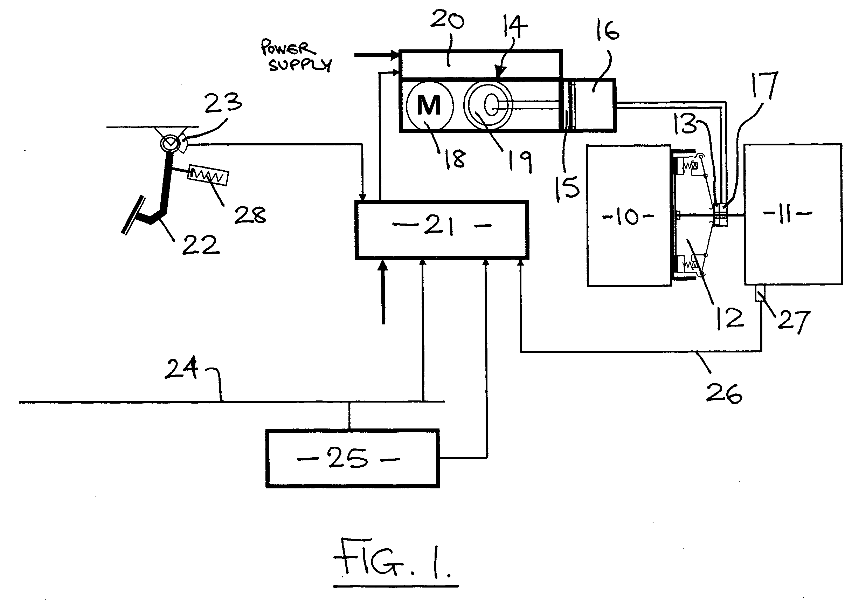

In an alternative arrangement, not shown, the clutch control unit 21 is integrated into the engine controller 25 and operates in a similar manner to that described above in relation to Figure 1.

In many motor vehicles the drive clutch is hydraulically operated by a pedal actuated master cylinder and a slave cylinder which may be positioned concentrically with the clutch release bearing. In such a set up the hydraulic actuator must allow actuation of the clutch by both the driver and the electrically driven actuator mechanism of the clutch control system.

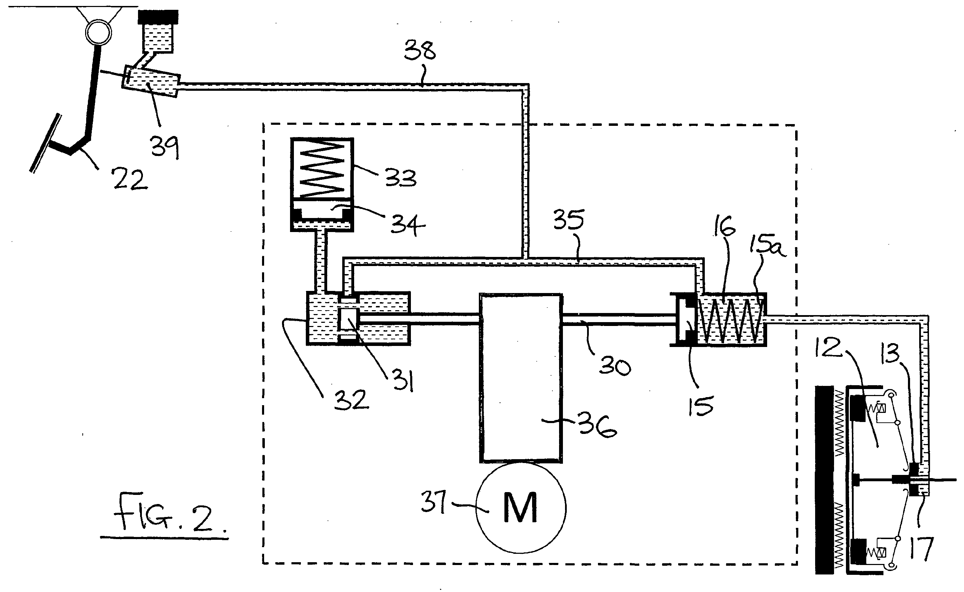

An example of such an arrangement is shown in Figures 2 to 5. In this arrangement the clutch 12 is again operated by the release bearing 13 and the concentric slave cylinder 17. Hydraulic piston 15 which pressurises fluid in chamber 16 is spring biased at 15a and connected via mechanical linkage 30 with a piston 31 of a by-pass valve 32 which is in turn connected with a pedal force accumulator 33 which includes a spring-loaded piston 34. Linkage 30 is also connected with actuator 36 which includes an operating electric motor 37. Hydraulic connection 35 connects chamber 16 and by-pass valve 32 and a further connection 38 connects connection 35 with a master cylinder 39 operated by clutch pedal 22.

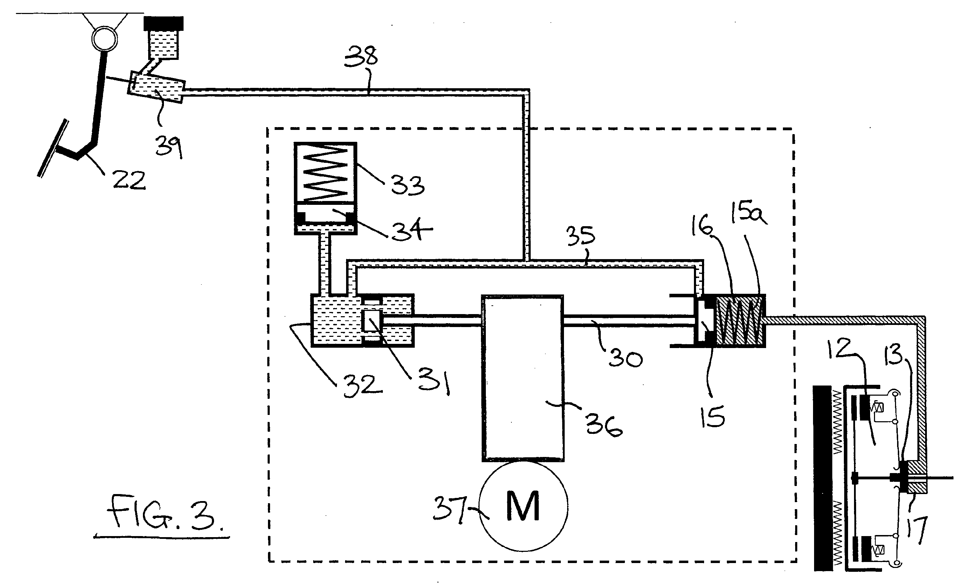

Figure 2 shows the arrangement on a clutch engage condition in which none of the hydraulic lines is pressurised. In the Figure 3 position motor 37 has been operated to cause actuator 36 to move linkage 30 to the right thus pressurising chamber 16 to disengage the clutch. This is the condition which will arise when, for example, the system has operated to select the coasting mode of operation of the vehicle or to disengage the clutch in response to some other vehicle operating criteria which is controlled by the associated clutch control unit 21 (see Figure 1).

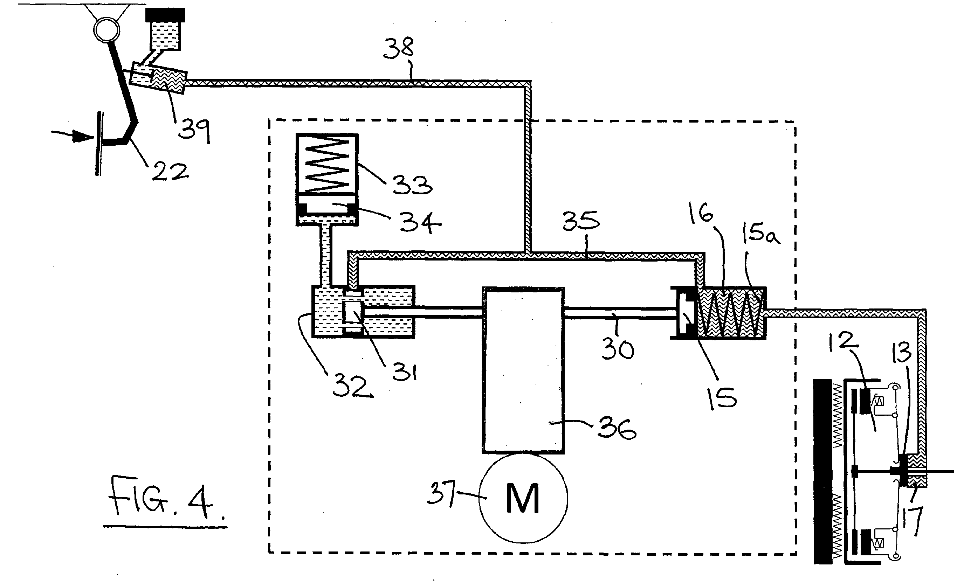

Figure 4 shows the arrangement in the position occupied when the driver has depressed the clutch pedal 22 to disengage the clutch manually and the actuator 36 is not operative. In this position master cylinder 39 pressurises chamber 16 via lines 38 and 35 to operate the concentric slave cylinder 17 to release the clutch. The piston 31 of by-pass valve 32 prevents flow of fluid to pedal force accumulator 33.

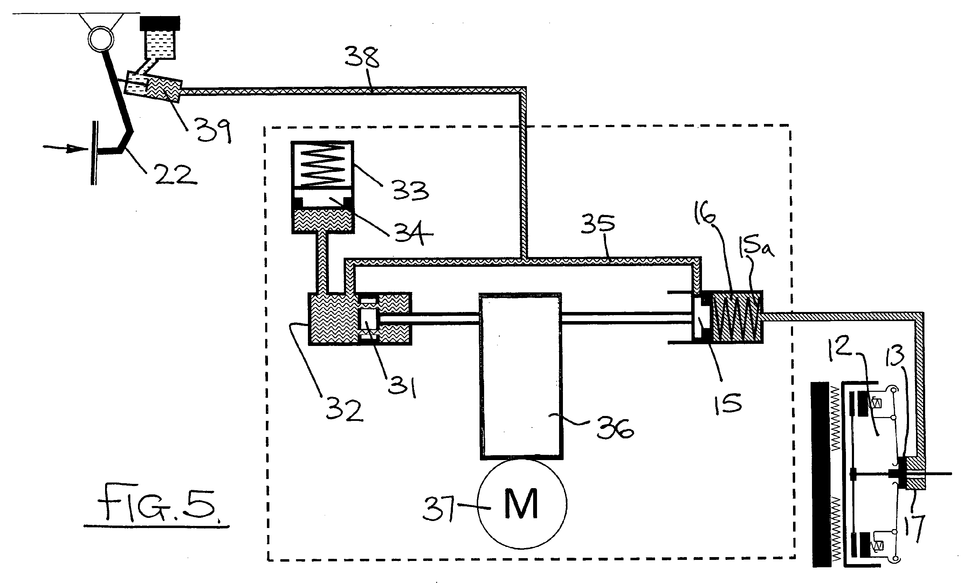

In the Figure 5 condition the actuator 36 has been operated by motor 37 to pressurise chamber 16 and concentric slave cylinder 17 (as in Figure 2) and pedal 22 has then been depressed by the driver to ensure that the clutch is disengaged and to take over manual control of the clutch. The fluid displaced by master cylinder 39 is able to flow to accumulator 33 as the piston 31 of by-pass valve 32 no longer closes off hydraulic connection 35. The operator is thus able to take over manual control of the clutch despite the fact that slave cylinder 17 has already been operated by the motor 37 and actuator 36.

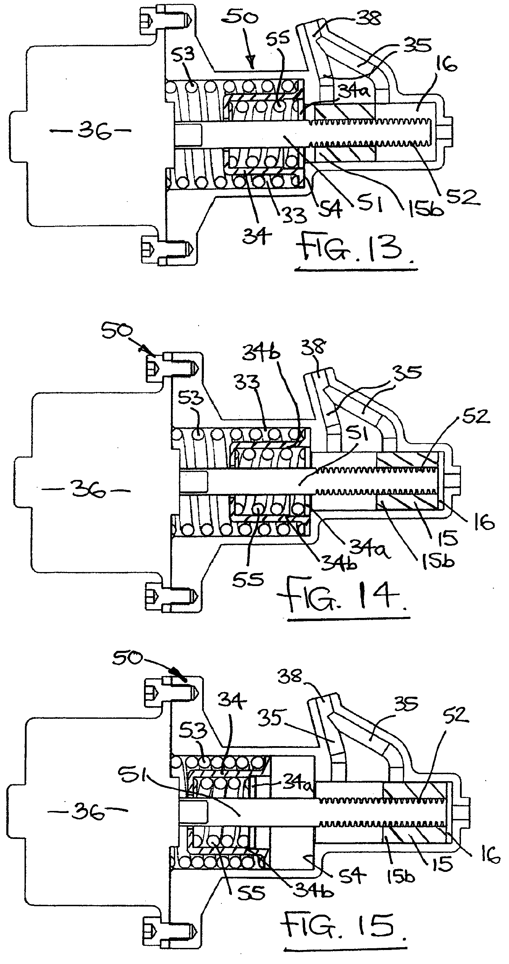

Figures 13 to 15 show an actuator unit which embodies the principle of operation shown schematically in Figures 2 to 5. The actuator 50 is connect with the master cylinder 39 via line 38 and has an electric motor 36 which rotates a spindle 51 which is screw-threaded at 52. Threaded portion 52 of the spindle 51 engages a thread within piston 15 (piston 15 being prevented from rotating in chamber 16) so that rotation of spindle 51 moves piston within chamber 16 (to the right or left depending on the direction of rotation of the spindle) to generate hydraulic pressure in chamber 16 to disengage the clutch as described above (see Figure 14).

The end 15b of Piston 15 also acts as the previously described by-pass valve 31 to restrict flow from passage 35 to the accumulator 33 (see Figure 13) whose piston 34 is acted on by an outer low rate spring 53 which is preloaded during the assembly to bias the piston 34 to the right into contact with a shoulder 54, An inner higher rate spring 55 which is not preloaded also biases an inner piston 34a to the right towards shoulder 54. When the system is pressurised by the operation of the master cylinder 39 this pressure acts directly on the inner spring via inner piston 34a which is then compressed up to a point when its load matches the preload of the outer spring 53. At this point, the travel of the inner piston 34a is stopped by a shoulder 34b and the pressure then only compresses the outer spring 53 to provide a two stage load on the clutch operating pedal 22 which approximates to the pedal loading experienced when operating a standard clutch pedal.

The above electro-hydraulic clutch operating arrangement in accordance with the present invention thus allows the driver to push the clutch pedal after the electric motor has already opened the clutch, and thereby resume control of the clutch system as he or she wishes. It is also essential that the electrical operation of the clutch system by the electric motor does not cause any unexpected movement of the clutch pedal which would be disconcerting for the driver.

It will be understood that id the clutch control system includes a coasting function this coasting functionality may be conveniently split into two parts:
1. The control system which controls the position of the actuator (and hence the clutch release bearing):
   - This software is responsible for controlling current, and consequently speed and position of the electric motor.
   - It is required that this be a closed loop control algorithm, which minimises the error between the desired and actual measured actuator position.
2. The supervisory control system. This software is responsible for calculating the desired position of the clutch actuator. If the coasting control system is integrated into an overall clutch control system which controls clutch engagement and disengagement during starting and stopping of the vehicle, changing ratios in the driveline transmission and damping torsional vibrations in the driveline by slipping the clutch, the system will comprise:
   - A series of observers which monitor incoming data to the system from both the clutch system sensors and other systems in the vehicle, and consequently output the operating state of the vehicle to the..
   - Control Function Selector, which selects the appropriate clutch actuator positional control function, according to the instantaneous requirements.
   - A series of control laws (functions), which output the desired clutch actuator position.

The main control functions of interest for enabling coasting functionality are as follows:
i. An open loop function which enables the actuator to open the clutch at a constant ramp rate. This function may be employed whenever the clutch is required to be opened to initiate coasting
ii. An open loop function which enables the actuator to close the clutch at a constant ramp rate. This function may be employed whenever the clutch is required to be re-engaged after coasting, when the vehicle is over-running (i.e. coasting is terminated because the driver has pressed the brakes or used the direction indicators, intending to slow the vehicle down, but has not pressed the accelerator pedal).
iii. A closed loop control function which manages closing of the clutch when the driver presses the accelerator. It is important that this function may successfully enable drive to be resumed through the vehicle driveline, and the direction of vehicle acceleration to be changed from deceleration to acceleration without inducing passenger discomfort.

This requirement has been successfully achieved by the use of a closed loop control function which controls rotational speed difference between the engine and transmission input shafts.

The behaviour of the closed loop control function is generally as follows:
Rotating Speed Difference > Rotating Speed Difference Target → Move the Clutch Release Bearing in the clutch closing direction.
Rotating Speed Difference < Rotating Speed Difference Target → Move the Clutch Release Bearing in the clutch opening direction.

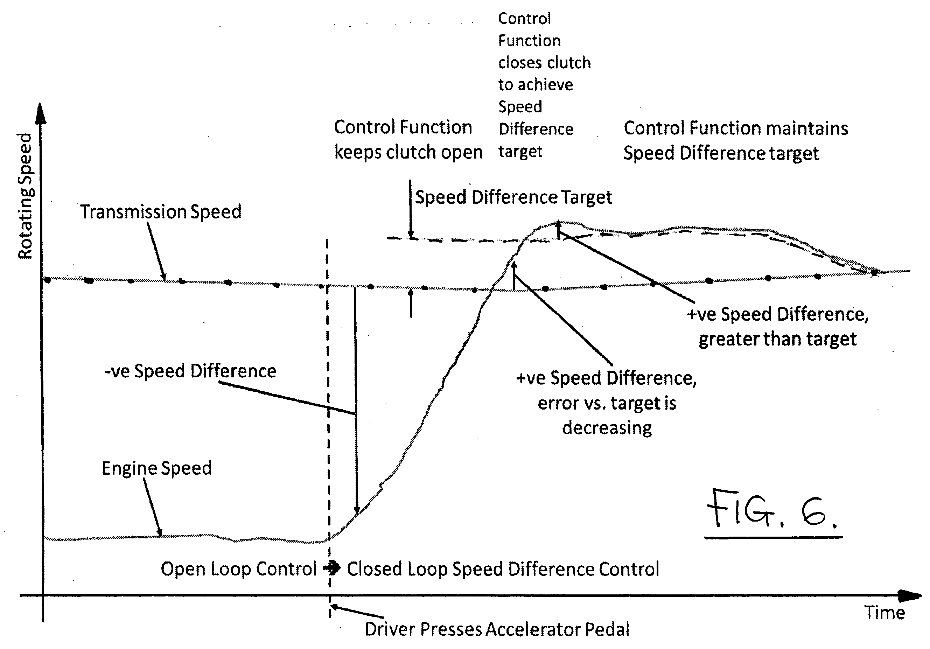

This leads to the system behaviour, when the accelerator is depressed during the coasting function, which is shown in Figure 6.

The important consequence of this control function behaviour is that clutch closing is initiated only when a positive speed difference exists between the engine and the transmission input shafts (i.e. when the engine speed is higher than the transmission input shaft speed). This ensures that the re-connection of the engine inertia to the driveline system does not result in initial deceleration torque application to the vehicle driveline, and consequent driveline oscillation resulting from the following torque application direction reversal as the vehicle starts to re-accelerate.

In order to satisfy the information requirements of both the vehicle operating system observers and the consequently selected control system functions, suitable information from either dedicated sensors, or existing sensors which make information available via CAN are used. The list of information required is as follows:
- Power mode status of the vehicle (to enable suitable start-up / shut down of the system)
- Engine Rotating Speed
- Engine Torque at the Flywheel
- Accelerator pedal position (including any 'virtual' inputs such as cruise control)
- Clutch pedal position
- Brake pedal operation
- EITHER Transmission Input Shaft Rotating Speed and Vehicle wheel / road speed OR Vehicle wheel / road speed and selected gear (selected gear needs to be a direct measurement, not a calculation based on engine speed and road speed)
- Clutch actuator / release bearing position.

Referring to Figures 7 to 10 these show an alternative suitable totally electrical actuator 110 as disclosed in the previously referred to earlier UK patent application No. 1420522.3 which has a housing 111 on which a drive motor 112 is mounted by bolts 112a. Motor 112 has a toothed output shaft 113 which meshes with teeth 114 on an outer periphery of a rotatable quadrant-like member 115 which is rotatable relative to housing 111 on a shaft 116. Quadrant member 115 has a pin 117 which engages a slot 118 in a rocker lever 119 which is pivoted on the housing 111 on a shaft 120. A second slot 121 in rocker lever 119 engages a pin 122 provided on an operating member 123 which moves linearly relative to housing 111 (as indicated by Arrows X) on rotation on motor shaft 113.

This electrical actuator 110 is used both when the clutch operation is initiated by the operation of the clutch pedal 22 and its associated sensor 23 by the vehicle operator or when clutch operation is initiated by and automatic clutch control system such as that referred to above at 21.

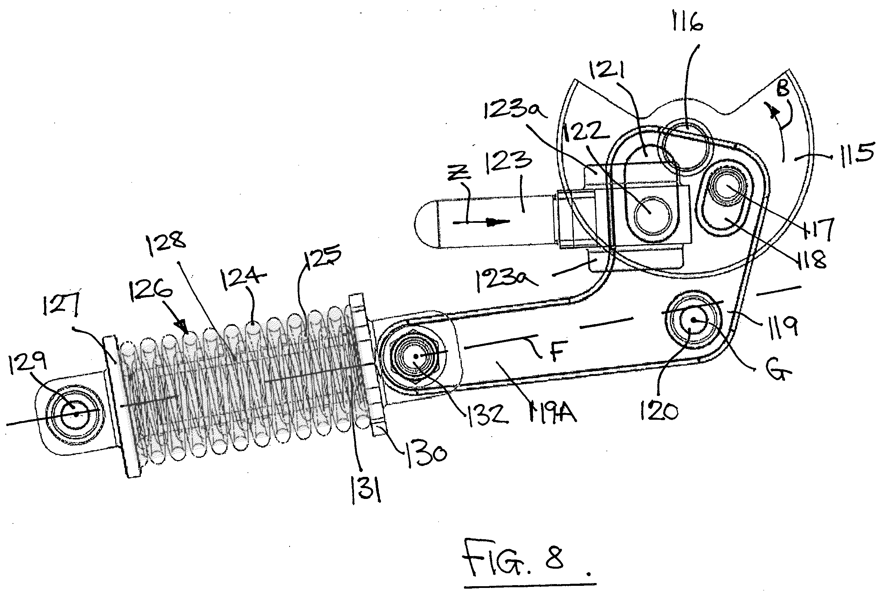

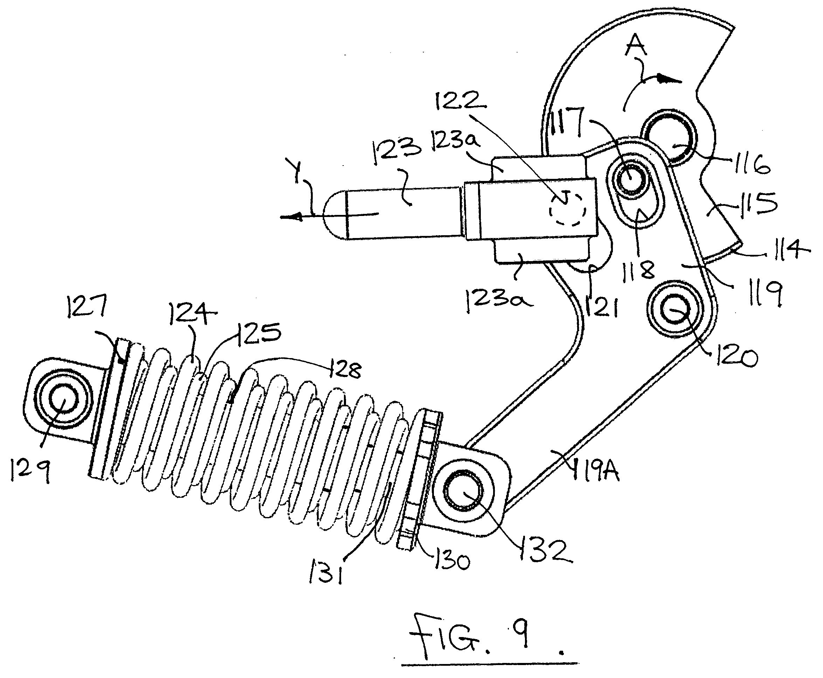

When used to operate a vehicle driveline clutch, the actuating member 123 moves between an extended end travel position, shown in Figure 9, in which the clutch is disengaged and its other retracted end travel position, shown in Figures 7 and 8, in which the clutch is engaged.

Biasing means in the form of coil springs 124 and 125 act on a lever arm portion 119A of rocker lever 119. Springs 124 and 125 are mounted on a carrier 126 which has an end abutment 127 carried on a tube 128 within the springs. Abutment 127 is pivotally mounted on housing 111 via bolt 129 and a second end abutment 130 which has a projection 131 slidable within tube 128 is pivotally attached to lever arm portion 119A by bolt 132. Thus, as will be understood, springs 124 and 125 bias abutment 130 away from abutment 127 so that a force is applied to lever arm 119A which varies as rocker arm 119 and carrier 126 pivot during use of the actuator.

As will be appreciated, the number and configuration of springs used to bias the rocker arm may vary according to the clutch release characteristics required in the vehicle in question.

Figure 9 shows the actuator linkage in its clutch release position in which the motor 112 is applying a clockwise force (arrow A) to quadrant member 115 so that operating member 123 is moved into its extended end travel position as indicated by arrow Y. During most of the movement of the operating member to its extended position the springs 124 and 125 also apply a force to rocker lever 119 which assists the motor to disengage the clutch.

To engage the clutch quadrant member 115 is rotated anti-clockwise, as shown by arrow B in Figure 8, so that the operating member 123 moves in direction Z. As the clutch reaches its engaged position, shown in Figure 8, the line of action F of the bias springs 124 and 125 moves over-centre relative to the axis G of pivoting of the rocker arm 119. This means that in the engaged position of the springs 124 and 125 also hold the clutch in its engaged position ensuring that no motor power required to maintain the clutch closed.

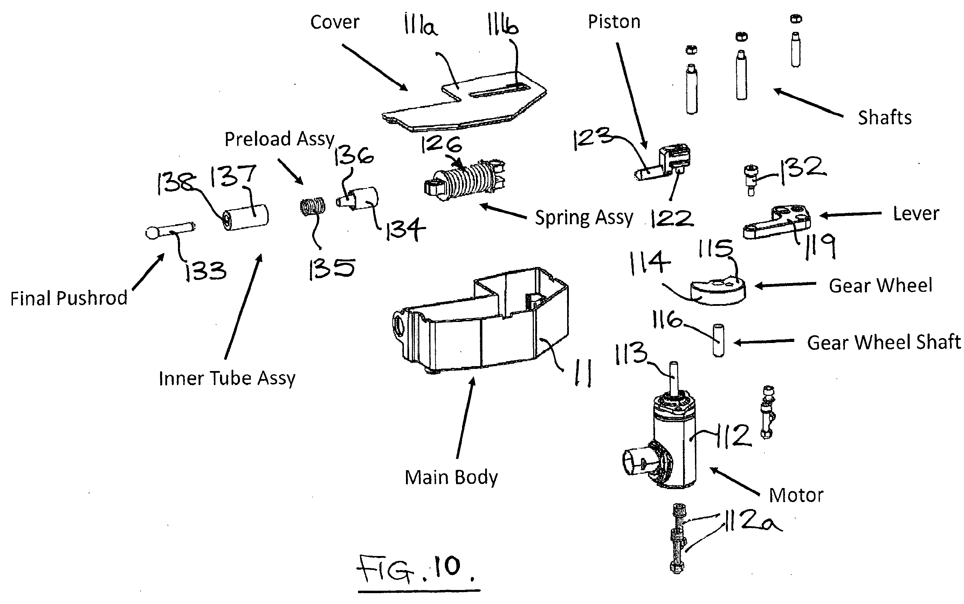

As best seen from Figures 7 and 10 the operating member 123 pushes a final push rod 133 via a receiving piston 134 within which operating member 123 engages and also via a preload spring 135 which surrounds a nose 136 on piston 134. Spring 135 in turn engages within a hollow piston 137 having an end cup 138 which receives the final push rod 133. Preload spring 135 ensures that final push rod 133 is always in contact with the clutch operating lever (not Shown) which actually operates the clutch.

The operating member 123 is provided with one or more projections 123a which slide in grooves in the housing 111 and which prevent the twisting or tipping of the operating member relative to the housing during its linear motion.

As visible in Figure 10 a cover 111a completes the housing 111. Cover 111a may include a slot 111b which severs as a window through which a position sensor (not shown) can sense the position of the operating member 123. This slot may be located elsewhere in the housing 111 if necessary.

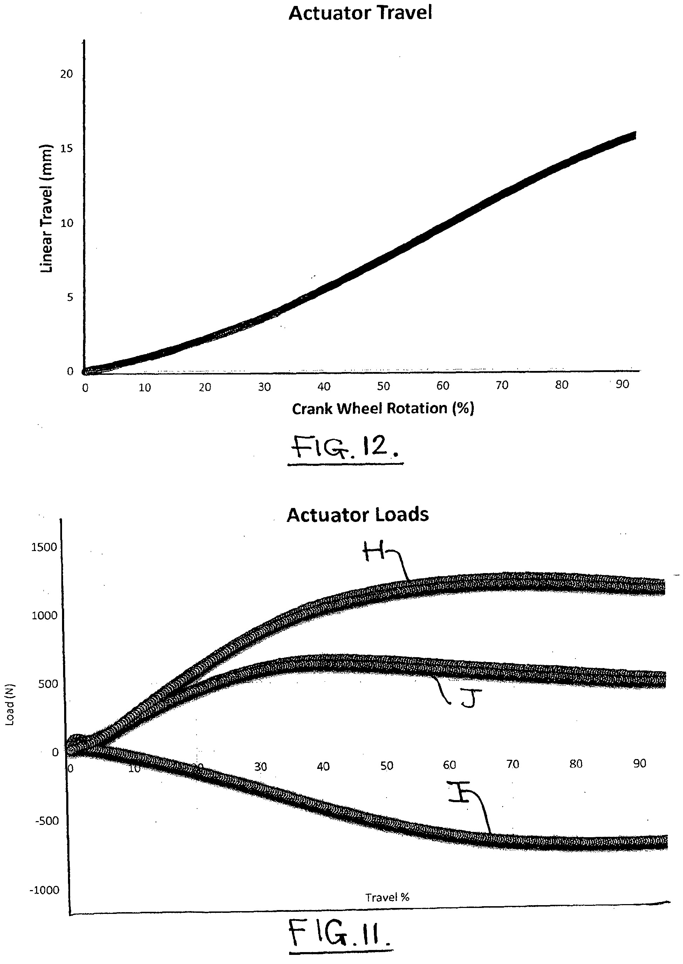

Figure 11 shows graphically in curve H the variation of the clutch release force as the clutch is disengaged/engaged. Curve I shows the biasing force applied to the rocker lever by the springs 124 and 125 during disengagement/engagement and curve J shows the resultant force which the motor must apply throughout its travel.

Figure 12 shows the linear relationship between the motor angular travel and the pushrod linear travel throughout the actuator's range of movement. This linear relationship provides consistent and smooth operation of the clutch throughout its entire range of movement and helps positional control at the two extreme positions of travel.

The actuator may include a wear compensation means (not shown) which maintains the travel of the actuator substantially constant as the clutch wears. Alternatively, a mechanical wear compensation means may be used in the clutch actuating mechanism which may, for example, use a one way ratchet system.

In the case of motor of power failure the actuator described above always parks itself in the clutch closed position. Also the quadrant 115 only needs to rotate through 90 degrees (from the Figure 8 to the Figure 9 position) to achieve the required linear movement. This allows the use of a slower and thus cheaper motor. The provision of the bias assistance to disengage the clutch again allows the use of a less powerful motor and the geometry of the rocker lever and spring biasing ensures that the biasing also holds the clutch in its engaged position (when the clutch is biased to its engaged position) or to its released position (when the clutch is biased to its released position).

The present invention thus provides a clutch control system and actuator which improves vehicle operation and allows both manual and electrical operation of the associated clutch and can also improve vehicle economy when the coasting facility is provided.

## Claims

1. A control system for a vehicle driveline clutch which drives ground engaging wheels from an engine, the system having a driver operated clutch control which allows the vehicle driver to manually operate the clutch when moving away from rest and stopping and when gearshifting in a transmission of the driveline and an electrically powered actuator which can operate the clutch independently from the driver operated control, the system being **characterised in that** the driver operated control operates a hydraulic master cylinder which is connected with an actuating cylinder for the pressurisation thereof to provide a thrust force to manually actuate the clutch and the electrical operation of the clutch is provided by an electric motor which actuates a piston in the actuating cylinder to pressurise this cylinder and thus again actuate the clutch under the control of the motor, the control system also including a pedal force accumulator which is also hydraulically connected with the master cylinder via by-pass valve means, operation of the electric motor opening the by-pass valve means to allow any hydraulic pressure generated by the master cylinder to be absorbed by the accumulator so that the master cylinder can be operated normally when the clutch has already been actuated by the motor.

2. A control system according to claim 1 **characterised in that** part of the piston also provides the by-pass valve means so that movement of the piston to a clutch disengaged position by the electric motor also connects the hydraulic generated by the operation of the master cylinder to the pedal force accumulator.

3. A control system according to claim 2 or 3 **characterised in that** the pedal force accumulator includes piston means displaceable against two levels of spring loading by the hydraulic pressure generated by the master cylinder so that the operator of the master cylinder experiences two levels of resistance to the operation of the master cylinder.

4. A control system according to any one of claims 1 to 3 **characterised in that** the motor has a threaded output shaft on which the piston is screw-threaded and the piston is held against rotation in the actuating cylinder so that rotation of the output shaft by the motor moves the piston axially in the actuating cylinder to provide the thrust force to operate the associated clutch.

5. A control system according to any one of claims 1 to 4 **characterised in that** it is arranged to select a coasting mode of operation of the vehicle in which the drive clutch is disengaged and the engine output is reduced when a number of predetermined vehicle operating conditions occur.

6. A control system according to any one of claims claim 5 **characterised in that** the coasting mode is selected when the following vehicle operating conditions occur:
- An accelerator pedal has an input < a predetermined threshold value, AND
- Specified gears are selected in the transmission of the driveline, AND
- A transmission input shaft speed > engine idle speed, AND
- Power unit speed < a predetermined threshold speed (to avoid component overspeeding).

7. A control system according to claim 6 **characterised in that** the coasting mode is also selected when
- Power unit operating temperature > threshold temperature (to allow the engine to warm up in cold weather) AND/OR
- No significant 'recent' input the vehicle steering (to prevent coasting being initiated when driving in winding roads).

8. A control system according to any one of claims 5 to 7 **characterised in that** the coasting mode is cancelled when the following vehicle operating conditions occur:
- Driver applies input to accelerator pedal, and increases the power unit speed to equal that of the transmission input shaft, OR
- Driver applies the brakes of the vehicle, OR
- Driver changes gear, or presses and releases a clutch operating pedal.

9. A control system according to claim 8 **characterised in that** the coasting mode is also cancelled when any one of the following vehicle operating conditions occurs:
- Driver uses turn indicators,
- Rain sensors or windscreen wipers are active, or the ambient temperature sensor indicates the possibility of ice,
- GPS information indicates that the environment is not appropriate for coasting.

10. A control system according to any one of claims 1 to 9 **characterised in that** a closed loop algorithm is used to control engagement of the clutch so that the clutch is only engaged when the speed of the power unit is higher than the speed of rotation of an input shaft of the transmission of the driveline thereby ensuring that only a accelerating torque is applied to the driveline.

11. A control system according to any one of claims 1 to 10 **characterised in that** it is part of an overall clutch control system which controls clutch engagement and disengagement during starting and stopping of the vehicle, changing ratios in a driveline transmission and damping torsional vibrations in the driveline by slipping the clutch.

12. A control system according to any one of claims 1 to 10 **characterised in that** it is a self contained control system fitted as an "add -on" to an existing manually operated vehicle clutch control system.

13. An actuator unit for hydraulic and electrical operation of a vehicle clutch in a control system according to any one of claims 1 to 12, the unit being **characterised by** comprising:
- an actuating cylinder having an output which provides a thrust force to operate an associated clutch operating slave cylinder,
- an inlet for connection to a manually operable master cylinder for pressurisation thereof to provide the thrust force to operate the associated slave cylinder,
- an actuator mechanism for connecting the electric motor with a piston in the actuating cylinder to pressurise the cylinder to provide the thrust force to operate the associated slave cylinder,
- a pedal force accumulator hydraulically connected with the inlet via the by-pass valve means , the actuator mechanism opening the by-pass valve means to allow any hydraulic pressure generated by the master cylinder to be absorbed by the accumulator so that the master cylinder can be operated normally when the motor has already been actuated.

14. An actuator unit for hydraulic and electrical operation of a vehicle clutch, the unit being **characterised by** comprising:
- an actuating cylinder having an output which provides a thrust force to operate an associated clutch operating slave cylinder,
- an inlet for connection to a manually operable master cylinder for pressurisation thereof to provide the thrust force to operate the associated slave cylinder,
- an actuator mechanism for connecting an associated electric motor with a piston in the actuating cylinder to pressurise the cylinder to provide the thrust force to operate the associated slave cylinder,
- a pedal force accumulator hydraulically connected with the inlet via the by-pass valve means , the actuator mechanism opening the by-pass valve means to allow any hydraulic pressure generated by the master cylinder to be absorbed by the accumulator so that the master cylinder can be operated normally when the motor has already been actuated.
